# EUROPEAN PATENT APPLICATION

(11) **EP 2 514 598 A2**
(43) Date of publication of application: **24.10.2012**
(21) Application number: 12164225.0
(22) Date of filing: 16.04.2012
(51) Int. Cl.: B41J 3/407, G06F 3/12

(54) **Printing system, tape printer, printing control method of printing system, and program**

(30) Priority: 21.04.2011 JP 2011094866
(71) Applicant: Seiko Epson Corporation, Tokyo 163-0811 (JP)
(72) Inventor: Kajihara, Mikihiro, Suwa-shi, Nagano 392-8502 (JP)
(74) Representative: MERH-IP Matias Erny Reichl Hoffmann

(57) **Abstract**

An information processing apparatus 2 includes: an information-at-generation obtaining section 203 which obtains tape width information when printing data is generated; a printing data generating section 204 which generates the printing data on the basis of the obtained tape width information; a printing start instructing section 206 which is used to instruct a printing start; a printing start command section 209 which outputs a printing start command to a tape printer on the basis of the printing start instruction; an information-at-start obtaining section 207 which obtains tape width information when the printing start is instructed; and a width information determining section 208 which determines whether the tape width information obtained when the printing data is generated and the tape width information obtained when the printing start is instructed coincide with each other. If both the pieces of management information do not coincide with each other, the printing start command section 209 cancels the printing start command.

## Description

### BACKGROUND

### 1. Technical Field

The present invention relates to a printing system, a tape printer, a printer, a printing control method of a printing system, and a computer program product which generate printing data and perform a printing process on the basis of the printing data.

### 2. Related Art

In the related art, a printing system which includes a tape printer and an image data generation device connected to the tape printer through a cable has been proposed (refer to JP-A-2008-283647). The image data generation device displays an editing screen of a printing image to perform an editing process, and then adjusts the tape length. Then, the image data generation device generates printing data (image data) on the basis of the editing result of the printing image and the adjustment result of the tape length, and preview-displays the printing data on a printing confirming screen. In this state, when a printing instruction is given, the image data generation device outputs the printing data to the tape printer.

However, in such a printing system, since the printing data is generated and is then preview-displayed on the printing confirming screen, and thereafter, the printing data is output according to the printing instruction, a time lag occurs between the generation and output of the printing data. In this period, if exchange of a tape cartridge or the like is performed by a user, printing conditions are changed, which may cause a problem to the printing process. For example, if the tape width of a printing tape accommodated in a tape cartridge is obtained and printing data is generated on the basis of the obtained tape width, in generation of the printing data, and then, if the existing tape cartridge is exchanged into a tape cartridge which accommodates a printing tape having a different width, during the time lag, and the printing data is output, since the tape width obtained in generation of the printing data and the actual tape width in printing are different from each other, it is difficult to perform a normal printing process.

### SUMMARY

An advantage of some aspects of the invention is to provide a printing system, a tape printer, a printer, a printing control method of a printing system, and a program which are capable of appropriately coping with change in printing conditions after printing data is generated.

An aspect of the invention is directed to a printing system including a printer and an information processing apparatus which is able to be connected to the printer and generates printing data, the printer being configured to perform a printing process on the basis of the generated printing data, wherein the information processing apparatus includes: an information-at-generation obtaining section which obtains management information of the printer when the printing data is generated; a printing data generating section which generates the printing data on the basis of the obtained management information; a printing start instructing section which instructs or is used to instruct start of printing based on the printing data; a printing start command section which outputs a printing start command to the printer on the basis of the printing start instruction; an information-at-start obtaining section which obtains management information of the printer when the printing start is instructed; and a management information determining section which determines whether the management information obtained when the printing data is generated and the management information obtained when the printing start is instructed coincide with each other, and wherein in a case where the management information obtained when the printing data is generated and the management information obtained when the printing start is instructed do not coincide with each other, as a determination result in the management information determining section, the printing start command section cancels the printing start command to the printer.

Another aspect of the invention is directed to a printer which performs a printing process on the basis of generated printing data, including: an information-at-generation obtaining section which obtains management information of the printer when the printing data is generated; a printing data generating section which generates the printing data on the basis of the obtained management information; a printing start instructing section which instructs or is used to instruct start of printing based on the printing data; a printing control section which performs the printing process on the basis of the printing start instruction; an information-at-start obtaining section which obtains management information of the printer when the printing start is instructed; and a management information determining section which determines whether the management information obtained when the printing data is generated and the management information obtained when the printing start is instructed coincide with each other, wherein in a case where the management information obtained when the printing data is generated and the management information obtained when the printing start is instructed do not coincide with each other, as a determination result in the management information determining section, the printing control section cancels the printing process. This aspect is an alternative aspect in which the printer itself has the means that were implemented in the information processing apparatus in the previous aspect.

Still another aspect of the invention is directed to a printing control method of a printing system including a printer and an information processing apparatus which is able to be connected to the printer and generates printing data which is able to be printed in the printer (alternatively, an analogous control method may be provided for the above alternative aspect in which the printer itself has the means that were implemented in the information processing apparatus in the previous aspect), the method including the following performed by the information processing apparatus: obtaining management information in the printer when the printing data is generated; generating the printing data on the basis of the obtained management information; obtaining a start instruction of printing based on the printing data; outputting a printing start command to the printer on the basis of the printing start instruction; obtaining management information of the printer when the printing start instruction is obtained; and determining whether the management information obtained when the printing data is generated and the management information obtained when the printing start instruction is obtained coincide with each other, wherein in a case where the management information obtained when the printing data is generated and the management information obtained when the printing start instruction is obtained do not coincide with each other, as a determination result in the determining, the printing start command to the printer is canceled, in the outputting.

According to these configurations, the management information obtained when the printing data is generated and the management information obtained when the printing start is instructed are compared with each other, and in a case where both the pieces of information do not coincide with each other, the printing start command to the printer (printing process) is canceled. That is, by confirming change in printing conditions during the time lag, and by canceling the printing start command (printing process), it is possible to avoid deficiency of the printing process. Thus, it is possible to appropriately cope with change in the printing conditions after the printing data is generated, and to appropriately perform the printing process.

In the printing system as described with respect to one or more aspects above, it is preferred that the information processing apparatus or the printer further includes a confirmation screen display section which displays a printing confirmation screen for confirming whether to perform a printing process based on the generated printing data, and the printing start instructing section may instruct the printing start in a state where the printing confirmation screen is displayed.

In this case, it is preferable that the confirmation screen display section displays a screen which includes a printing preview image based on the printing data, as the printing confirmation screen.

In this case, it is preferable that the confirmation screen display section displays a screen which includes an error information image indicating that the printing process based on the management information obtained when the printing data is generated is not performed, as the printing confirmation screen, in a case where the management information obtained when the printing data is generated and the management information obtained when the printing start is instructed do not coincide with each other.

According to these configurations, by displaying the printing confirmation screen, it is possible to confirm the printing process based on the printing data, and to prevent erroneous printing. Further, since the management information after the printing confirmation screen is displayed (the management information when the printing start is instructed) is obtained and is compared with the management information before the printing confirmation screen is displayed (the management information when the printing data is generated), it is possible to confirm change in the printing conditions before and after the printing confirmation screen is displayed to cancel the printing start command. Thus, it is possible to prevent the printing process confirmed in the printing confirmation screen and an actual printing process from being performed under different printing conditions.

On the other hand, it is preferable that the information processing apparatus or the printer further includes a notifying section which notifies that the printing start command is canceled.

According to this configuration, it is possible for a user to confirm that the printing start command is canceled.

In this case, it is preferable that the printer is able to receive/mount a cartridge which accommodates a consumable article relating to printing, and the management information is information about the consumable article accommodated in the received/mounted cartridge.

In this case, it is preferable that the consumable article is a printing tape, and the management information is information about the width or type of the printing tape accommodated in the received/mounted cartridge.

According to these configurations, even when the cartridge is exchanged during the time lag, it is possible to appropriately cope with change in the consumable article (for example, the printing tape) according to this exchange, and to appropriately perform the printing process. Here, the consumable article is not limited to the printing tape, but may be an ink ribbon, for example. Further, the tape type as mentioned above may be classified, for example, according to its material such as PET, thermal paper, plain paper and the like, and according to its shape such as an elongated tape, a sticker type die cut tape and the like.

Yet another aspect of the invention is directed to a tape printer which functions as the printer used in the printing system as described above.

According to this configuration, it is possible to appropriately perform the printing process with respect to the printing tape.

Still yet another aspect of the invention is directed to a computer program product which causes a routine of the printing control method of the printing system as described above to be executed in a computer.

According to this configuration, just by installing this program in the computer, it is possible to easily realize the printing method.

### BRIEF DESCRIPTION OF THE DRAWINGS

The invention will be described with reference to the accompanying drawings, wherein like numbers reference like elements.

Fig. 1 is a diagram illustrating a printing system according to an embodiment of the invention.

Fig. 2 is a control block diagram of an information processing device.

Fig. 3A is a diagram illustrating an editing screen, and Fig. 3B is a diagram illustrating a preview screen.

Fig. 4 is a perspective view illustrating an appearance of a tape printer in a state where a cover is opened.

Fig. 5 is a control block diagram illustrating a tape printer.

Fig. 6 is a functional block diagram illustrating an information processing device and a tape printer.

Fig. 7 is a flowchart illustrating a printing operation in a printing system.

Fig. 8 is a functional block diagram illustrating a tape printer according to a modification example.

### DESCRIPTION OF EXEMPLARY EMBODIMENTS

Hereinafter, an information processing device, a printing system, a tape printer, a printer, a program and a control method of an information processing device will be described with reference to the accompanying drawings. In embodiments of the invention, a printing system which includes an information processing device and a tape printer will be described as an example.

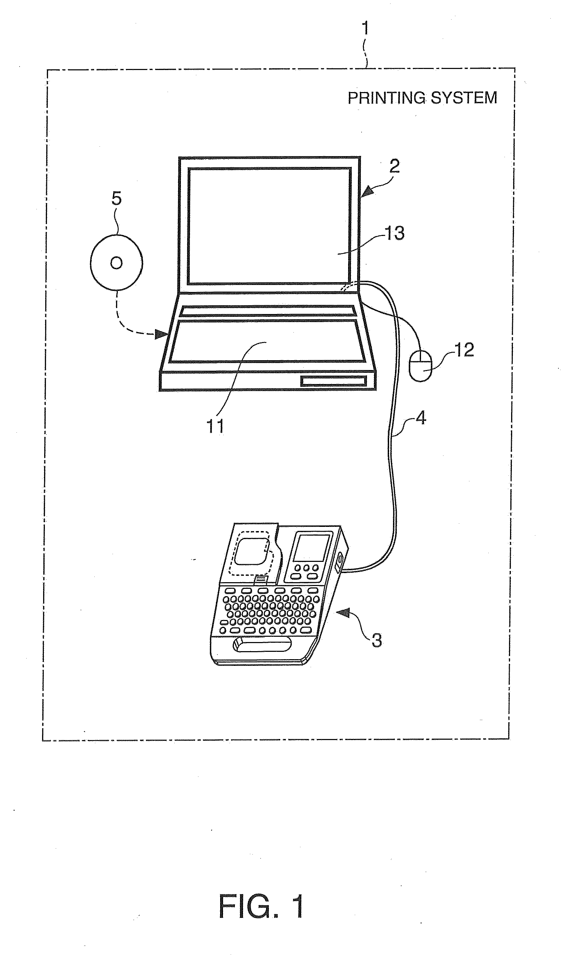

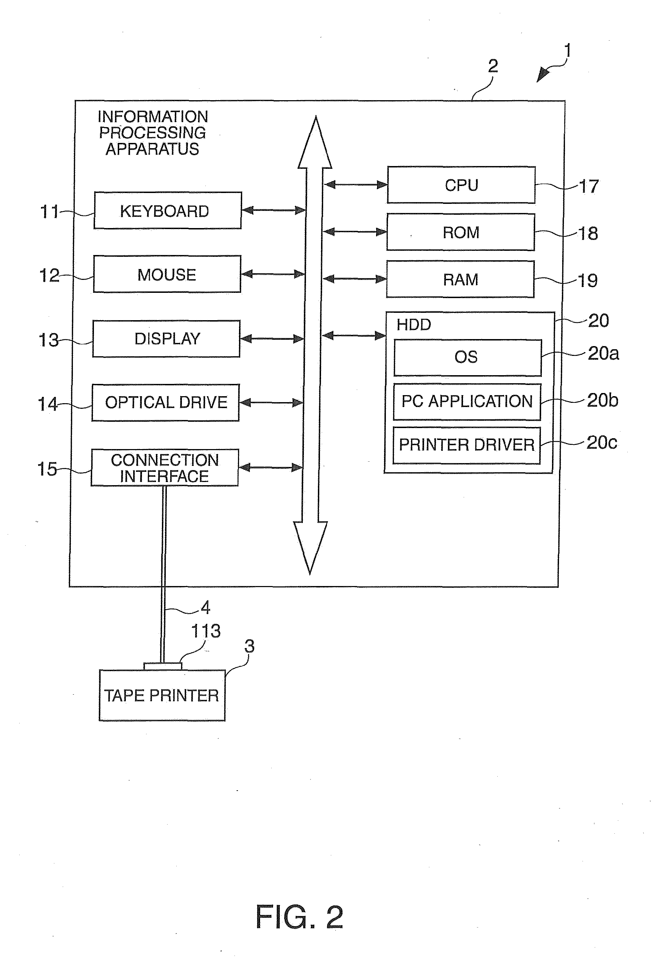

Fig. 1 is a diagram exemplarily illustrating a printing system 1. As shown in Fig. 1, the printing system 1 includes a tape printer 3 and an information processing device 2 which generates printing data capable of being printed by the tape printer 3, which are connected to each other through a cable 4. A general personal computer which includes a keyboard 11, a mouse 12, a display 13 and the like may be used as the information processing device 2. That is, by installing a PC application 20b and a printer driver 20c (see e.g. Fig. 2) which are stored in an optical disc 5 such as a CD-ROM or a DVD-ROM in the personal computer, the personal computer may function as the information processing device 2 according to the present embodiment.

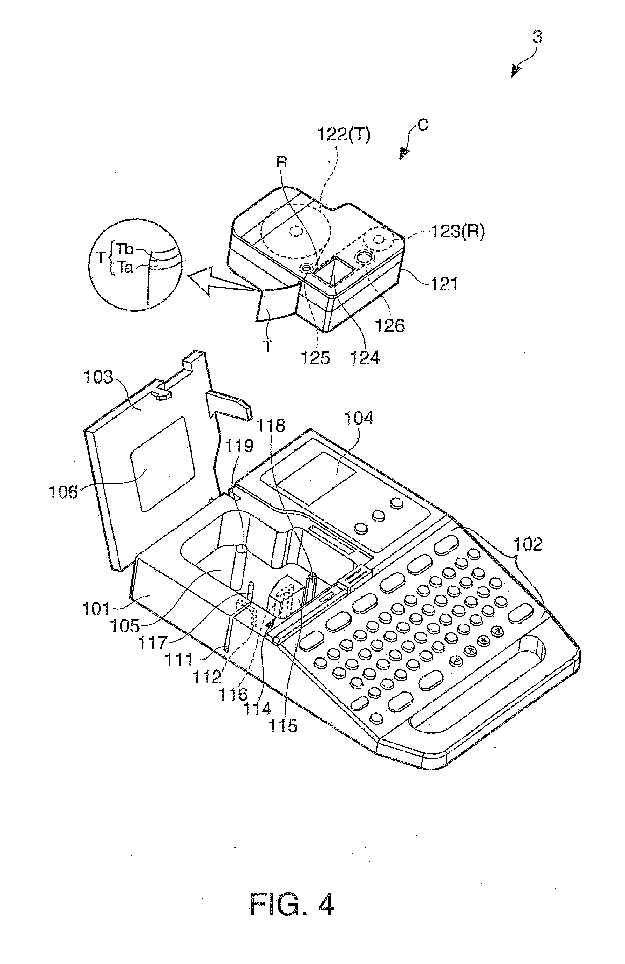

The tape printer 3 uses an elongated printing tape T (see e.g. Fig. 4) as a printing medium, and performs printing and cutting for the printing tape T on the basis of the printing data (image data) obtained from the information processing device 2 and the length of the tape, to thereby create a label.

In the present embodiment, a configuration is illustrated in which the information processing device 2 and the tape printer 3 are directly connected with each other through the cable 4, but in other embodiments they may be connected with each other through a network (the internet or a local area network) or may be connected with each other by wireless communication.

Next, a control configuration of the information processing device 2 will be exemplarily described with reference to Fig. 2. The information processing device 2 includes the keyboard 11, the mouse 12 and the display 13 shown in Fig. 1, and further includes an optical drive 14, a connection interface 15, a CPU 17 (Central Processing Unit), a ROM 18 (Read Only Memory), a RAM 19 (Random Access Memory), and a hard disk drive (HDD) 20.

The optical drive 14 reads data stored in the optical disc 5, and is used for installation of the PC application 20b and the printer driver 20c in the present embodiment. The optical disc 5 can be provided to a user as an accessory of the tape printer 3. The connection interface 15 is a connection port for connection with a connector 113 of the tape printer 3 through the cable 4, and employs, for example, a USB interface in the present embodiment.

The CPU 17 controls the entire information processing device 2 by performing arithmetic processing of a variety of data. The ROM 18 stores a control program or control data used when the CPU 17 executes a variety of processes. The RAM 19 is used as a work area when the CPU 17 performs the variety of processes.

The hard disk drive 20 stores an operating system (OS) 20a, and also stores the PC application 20b and the printer driver 20c which are read from the optical disc 5. The printer driver 20c performs bridging between the operating system 20a and the tape printer 3.

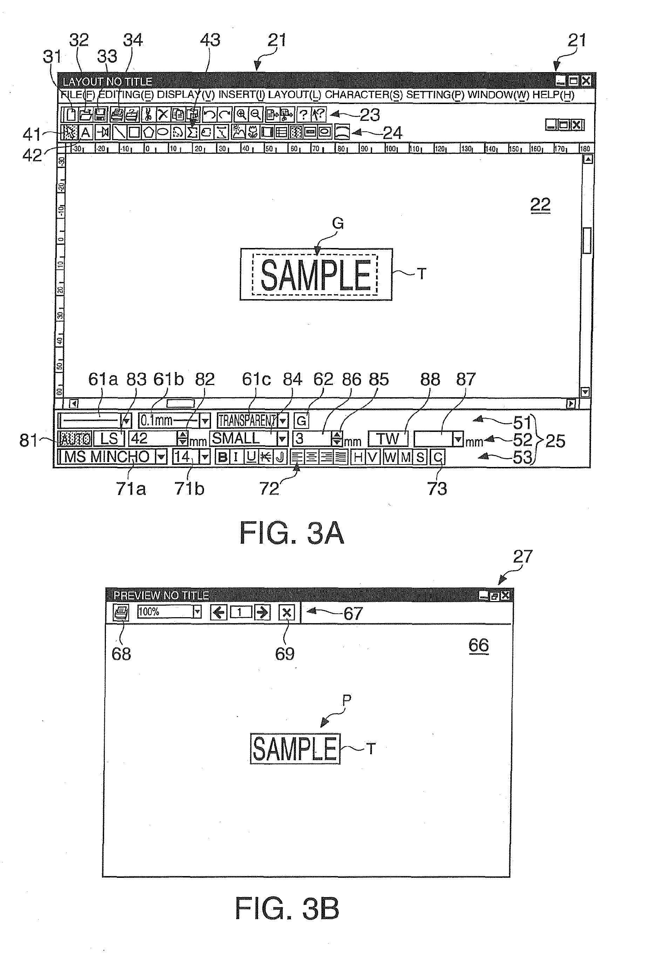

The PC application 20b is application software which is assembled and used in the operating system 20a, and performs processes such as creation and editing of a printing image G (see e.g. Fig. 3A) which is printed by the tape printer 3, setting of the width and length of the tape, and a printing instruction.

Here, an editing screen (application window) 21 and a preview screen (printing confirmation screen) 27 which are displayed on a display 13 by the start-up of the PC application 20b will be described with reference to Figs. 3A and 3B. As shown in Fig. 3A, the editing screen 21 is provided with an editing area 22 which displays an image of the printing tape T (hereinafter, simply referred to as "printing tape T") or a printing image G, a basic operation toolbar 23 for performing a basic operation, an input toolbar 24 for input of characters, figures or the like as input data, and an editing toolbar 25 for editing of the input data.

The basic operation toolbar 23 includes a new document button 31 for new creation of the image data (printing image G), a save button 32 for saving of the created image data, a reading button 33 for reading of the saved various data and display of the result in the editing area 22, a printing execution button 34 for execution of printing (for instruction of the printing execution) on the basis of the editing result which is displayed in the editing area 22, and the like. The PC application 20b in the present embodiment displays the preview screen 27 when the printing execution button 34 is pressed by a user.

The input toolbar 24 includes an object selection button 41 which selects an object such as a printing tape T or a printing image G, a character input button 42 for input of characters, a variety of figure input buttons 43 for input of straight lines or figures, and the like.

The editing toolbar 25 includes a figure toolbar 51 for performing editing of the input figure, a character toolbar 52 for editing of input characters, and a label creation toolbar 53 for creation of a label by the tape printer 3.

The figure toolbar 51 includes three list boxes 61a, 61b and 61c (pull-down menu) for selective setting of the type and thickness of the outline and filling of a figure from a plurality of options, and a figure setting window display button 62 for display of a window for a variety of settings relating to figures.

The character toolbar 52 includes list boxes 71a and 71b (pull-down menu) for selective setting of the font or size of input characters, various 14 setting buttons 72 for respective settings of the style (bold-type, italic, underlined or the like), the layout (for example, centering, right alignment or the like), vertical writing or horizontal writing, or decoration (white-outline type or trimming type) of input characters, and a character setting window display button 73 for display of a window for various settings relating to input characters.

The label creation toolbar 53 includes an automatic setting button 81 for automatic setting of the length of the printing tape T to be created according to the shape or the size of the printing image G, and a length setting button 83 for setting of the length of the printing tape T to be created to a predetermined length selected by a scroll bar 82, a margin setting list box 84 for selective setting of the length of a margin to be given before the printing image G from "small", "normal" and "large", a margin setting box 86 for setting of the length of the margin by a scroll bar 85 as a numeric value, a width list box 87, and a tape width obtaining button 88.

The width list box 87 is a list box for selective setting of the width of the tape of the printing tape T. The tape width obtaining button 88 is a button through which information about the tape width (tape width information to be described later) of the printing tape T which is installed in the tape printer 3 is obtained from the tape printer 3 to be displayed in the width list box 87. That is, the tape width obtaining button 88 is an element which supports the setting of the tape width.

As shown in Fig. 3B, the preview screen 27 is a printing management screen for confirming whether to perform the printing process, and includes a preview display area 66 which displays a printing preview image P of the edited printing image G and an operation toolbar 67 for execution of a variety of operations.

The printing preview image P is an image based on the generated printing data, and is an image obtained by simulating a label created on the basis of the editing result and the setting result in the editing screen 21. That is, the printing preview image P, which is obtained by overlapping the image of the printing data generated from the editing result and the setting result with the printing tape T based on the tape width and the tape length which are the setting results, is displayed in the preview display area 66. The operation toolbar 67 includes a printing start button 68 for start of printing (for instruction of the printing start) of the label which is preview-displayed, and a cancel button 69 for cancel of the printing of the label. If the printing start button 68 is pressed by a user, the PC application 20b in the present embodiment transmits a printing start command to the tape printer 3.

Then, a configuration of the tape printer 3 will be described with reference to Fig. 4. Fig. 4 is a perspective view illustrating an appearance of the tape printer 3 in a state where a cover 103 is opened. As shown in Fig. 4, the tape printer 3 has an appearance formed by a device case 101, and is provided with a keyboard 102 which includes a variety of input keys on a front upper surface of the device case 101. The cover 103 is installed on a rear left upper surface of the device case 101, and a display screen 104 which displays the input result through the key board 102, or the like is disposed on the right side thereof.

A cartridge mounting section 105 for mounting a tape cartridge C is formed inside the cover 103, and the tape cartridge C is mounted in the cartridge mounting section 105 to be able to be detached therefrom in a state where the cover 103 is opened. Further, a peephole window 106 for viewing mounting/non-mounting of the tape cartridge C in a state where the cover 103 is closed is formed in the cover 103.

On the left side of the device case 101 is formed a tape discharge port 111 which communicates the cartridge mounting section 105 with the outside, and through which the printing tape T is transmitted and discharged. A tape cutter 112 for cutting the transmitted printing tape T faces the tape discharge port 111. Thus, in a state where the printing tape T which is printed and discharged from the tape discharge port 111 is transmitted by a predetermined length and the transmission is temporarily stopped, the printed tape T is cut by the tape cutter 112 to form a label of a strip shape.

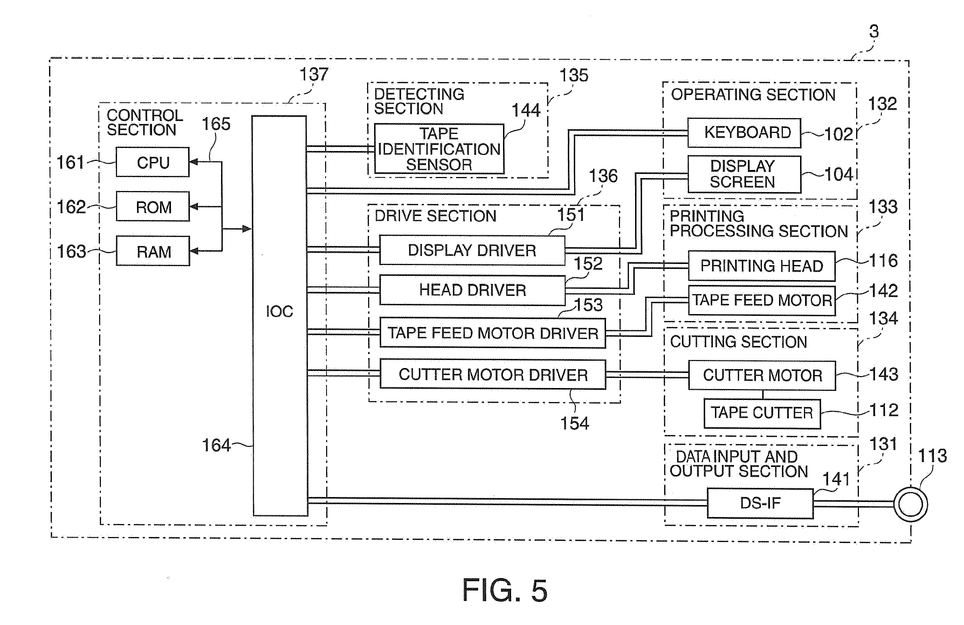

Further, although not shown, on the right side of the device case 101, a power supply port for power supply, and a connector 113 (see e.g. Fig. 2) for connection with the information processing device 2 are formed. Further, inside the device case 101, a circuit board which forms a control section 137 (see e.g. Fig. 5) which overall controls the tape printer 3 is assembled.

On the other hand, in the cartridge mounting section 105 are provided a head unit 114 which mounts therein a printing head 116 of a thermal type which includes a plurality of heating elements in a head cover 115, a platen drive shaft 117 which is disposed corresponding to the printing head 116, a winding drive shaft 118 on which an ink ribbon R (which will be described later) is wound, and a positioning protrusion 119 of a tape reel 122 (which will be described later). Further, a tape feed motor 142 (see e.g. Fig. 5) which rotates the platen drive shaft 117 and the winding drive shaft 118 is installed under the cartridge mounting section 105.

The tape cartridge C, which can be inserted into and/or removed from the cartridge mounting section 105, accommodates a tape reel 122 on which the printing tape T is wound in an upper central part inside the cartridge case 121, and a ribbon reel 123 on which the ink ribbon R is wound in a right lower part thereof, in which the printing tape T and the ink ribbon R are formed with the same width. Further, a through hole 124 for being engaged with the head cover 115 which covers the head unit 114 is formed in a left lower part of the tape reel 122. Here, the head unit 114 which is inserted in the through hole 124 corresponds to a portion where the printing tape T and the ink ribbon R overlap with each other. Further, a platen roller 125 which is fit to the platen drive shaft 117 for rotation is disposed. On the other hand, a ribbon winding reel 126 is disposed to be close to the ribbon reel 123, and the ink ribbon R which is reeled out of the ribbon reel 123 is disposed to turn around the head cover 115, and then is wound on the ribbon winding reel 126.

If the tape cartridge C is mounted in the cartridge mounting section 105, the through hole 124 is engaged with the head cover 115, a center hole of the tape reel 122 is engaged with the positioning protrusion 119, a center hole of the ribbon winding reel 126 is engaged with the winding driving shaft 118, and the printing head 116 is in contact with the platen roller 125 with the printing tape T and the ink ribbon R being interposed therebetween, so that printing can be performed. Further, by drawing the printing tape T from the tape cartridge C by the tape feed motor 142 on the basis of the printing data transmitted from the information processing device 2 and by selectively heating the heating elements of the printing head 116, a desired printing is performed on the printing tape T. A portion of the printing tape T where the printing is completed is frequently discharged to the outside from the tape discharge port 111. Then, if the printing is completed, the tape feed motor 142 continues the discharge of the printing tape T up to a position of the tape length which includes a margin, and then stops the discharge (thereafter, the procedure goes to a cutting process).

On the other hand, the printing tape T includes a recording tape Ta where an adhesive layer is formed on a rear surface, and a separation tape Tb which is attached to the recording tape Ta by the adhesive layer. Further, the printing tape T is accommodated in the cartridge case 121 in a roll shape with the recording tape Ta being disposed on the outer side and the separation tape Tb being disposed on the inner side. Further, as the printing tape T, a plurality of types having different tape types (tape width, ground color of the printing tape T, land pattern, material (quality) or the like) is prepared, and one type of printing tape T among them and the ink ribbon R are accommodated in each cartridge case 121.

Further, a plurality of holes (not shown) which specifies the type of the tape cartridge C is formed on the rear surface of the cartridge case 121. Further, a plurality of tape identification sensors (micro-switch or the like) 144 (see e.g. Fig. 5) which detects the holes is formed in the cartridge mounting section 105 corresponding to the plurality of holes. Thus, the type of the tape can be determined by detecting the states of the plurality of holes by the tape identification sensor 144.

Next, a control configuration of the tape printer 3 will be described with reference to Fig. 5. The tape printer 3 includes a data input and output section 131, an operating section 132, a printing processing section 133, a cutting section 134, a detecting section 135, a drive section 136, and a control section 137 which is connected to these sections and controls the entire tape printer 3.

The data input and output section 131 includes a data supply interface 141 (DS-IF), and receives input of printing data (image data) from the information processing device 2 through the connector 113, and also performs input and output of a variety of commands or statuses. The operating section 132 includes the keyboard 102 and the display screen 104 (for example a liquid crystal display), and serves as a user interface for input of character information by a user, display of a variety of information, or the like.

The printing processing section 133 includes the printing head 116 and the tape feed motor 142, and prints character information or image data which is input or received on the printing tape T while transferring the printing tape T and the ink ribbon R. The cutting section 134 includes the tape cutter 112 and a cutter motor 143 which drives the tape cutter 112, and cuts the printing tape T which is printed.

The detecting section 135 includes a sensor such as a rotation speed sensor (not shown) which detects the rotation speed of the tape feed motor 142, in addition to the tape identification sensor 144, and performs a variety of detection processes. The drive section 136 includes a display driver 151, a head driver 152, a tape feed motor driver 153, and a cutter motor driver 154, and drives the respective sections.

The control section 137 includes a CPU 161, a ROM 162, a RAM 163 and an input and output controller (IOC) 164, which are connected with each other through an internal bus 165. Further, the CPU 161 receives input of various signals and data from the respective sections of the tape printer 3 through the IOC 164, according to a control program or control data in the ROM 162. Further, by processing various data in the RAM 163 on the basis of the input various signals and data and outputting various signal data to the respective sections in the tap printer 3 through the IOC 164, the control section 137 controls the printing process or the like.

For example, if the printing data (image data) is obtained from the information processing apparatus 2 through the data supply interface 141, the CPU 161 sends an instruction for driving the printing head 116 or the tape feed motor 142 to the drive section 136 on the basis of printing parameters stored in the ROM 162, to thereby execute the printing process. Further, in a case where a width information requesting signal is obtained from the information processing apparatus 2, the CPU 161 transmits the tape width information (management information) about the printing tape T to the information processing apparatus 2. Here, the tape width information refers to information about the tape width of the printing tape T which is accommodated in the tape cartridge C which is mounted in the tape printer 3. That is, when the width information requesting signal is received, the CPU 161 obtains the tape width information through the tape identification sensor 144 and then transmits the result to the information processing apparatus 2.

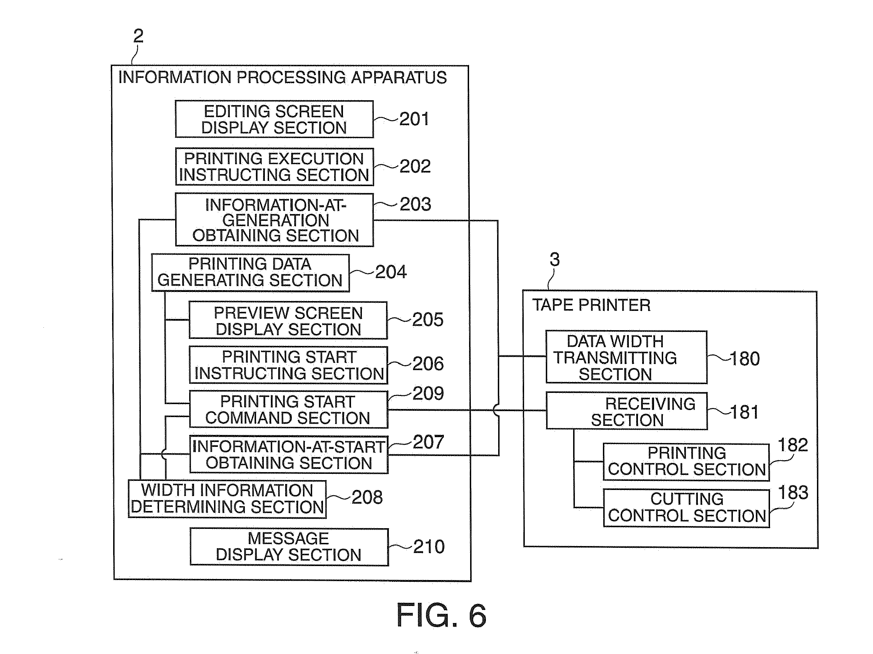

Next, functional configurations of the information processing apparatus 2 and the tape printer 3 will be described with reference to a functional block diagram of Fig. 6. Here, functions of the information processing apparatus 2 and the tape printer 3 when the printing process is performed will be described.

As shown in Fig. 6, the tape printer 3 includes a tape width transmitting section 180, a data receiving section 181, a printing control section 182, and a cutting control section 183. The tape width transmitting section 180 receives a width information requesting signal using the control section 137, the detecting section 135 and the data input and output section 131 as main sections, obtains the tape width information about the printing tape T according to the received width information requesting signal, and then replies the obtained tape width information to the information processing apparatus 2. The data receiving section 181 receives a printing start command from the information processing apparatus 2, using the control section 137 and the data input and output section 131 as main sections. The printing control section 182 receives the printing start command using the control section 137, the drive section 136 and the printing processing section 133 as main sections, and performs the printing process. The cutting control section 183 receives the printing start command using the control section 137, the drive section 136 and the cutting section 134 as main sections, and performs the cutting process.

The information processing apparatus 2 includes an editing screen display section 201, a printing execution instructing section 202, an information-at-generation obtaining section 203, a printing data generating section 204, a preview screen display section (confirmation screen display section) 205, a printing start instructing section 206, an information-at-start obtaining section 207, a width information determining section (management information determining section) 208, a printing start command section 209, and a message display section (notifying section) 210. These sections include the CPU 17 and the PC application 20b as main components.

The editing screen display section 201 displays the editing screen 21 on the display 13 as the PC application 20b is started. The printing execution instructing section 202 is a means for instructing printing execution by a user in a state where the editing screen 21 is displayed. Specifically, the printing execution instructing section 202 receives a push operation of the printing execution button 34 by the user and instructs printing execution based on the editing result and the setting result in the editing screen 21.

The information-at-generation obtaining section 203 obtains the tape width information when the printing data is generated, on the basis of the setting result in the editing screen 21. In other words, the information-at-generation obtaining section 203 obtains the tape width set in the editing screen 21 as the tape width information when the printing data is generated. The tape width information obtained by the information-at-generation obtaining section 203 is temporarily stored in the hard disk drive 20, and is used for a determining process through the width information determining section 208.

The printing data generating section 204 generates printing data on the basis of the editing result and the setting result in the editing screen 21, according to the printing execution instruction. More strictly speaking, the printing data generating section 204 generates the printing data on the basis of the printing image G which is the editing result and the tape width (tape width information) and the tape length which are the setting information.

The preview screen display section 205 displays the preview screen 27 on the display 13, on the basis of the generated printing data and the set tape width and tape length. The printing start instructing section 206 is means for instructing a printing start based on the printing data by the user in a state where the preview screen 27 is displayed. Specifically, the printing start instructing section 206 receives a push operation of the printing start button 68 by the user and instructs the printing start based on the generated printing data and the set tape length.

The information-at-start obtaining section 207 obtains the tape width information when the printing start is instructed. Specifically, the information-at-start obtaining section 207 transmits the width information requesting signal to the tape printer 3 according to the push operation of the printing start button 68, and obtains the tape width information which is a reply from the tape printer 3. The width information determining section 208 compares the tape width information when the printing data is generated with the tape width information when the printing start is instructed, and then determines whether both the pieces of tape width information coincide with each other.

The printing start command section 209 outputs a printing start command on the basis of the printing start instruction through the printing start instructing section 206. Specifically, the printing start command section 209 transmits the printing start command having the printing data and the tape length according to the push operation of the printing start button 68 to the tape printer 3. Here, the printing start command section 209 cancels the transmission of the printing start command, in a case where both the pieces of tape width information do not coincide with each other according to the determination through the width information determining section 208. In a case where the transmission of the printing start command is canceled by the printing start command section 209, the message display section 210 displays a message indicating that the transmission is canceled on the display 13 to notify the user that the transmission is canceled.

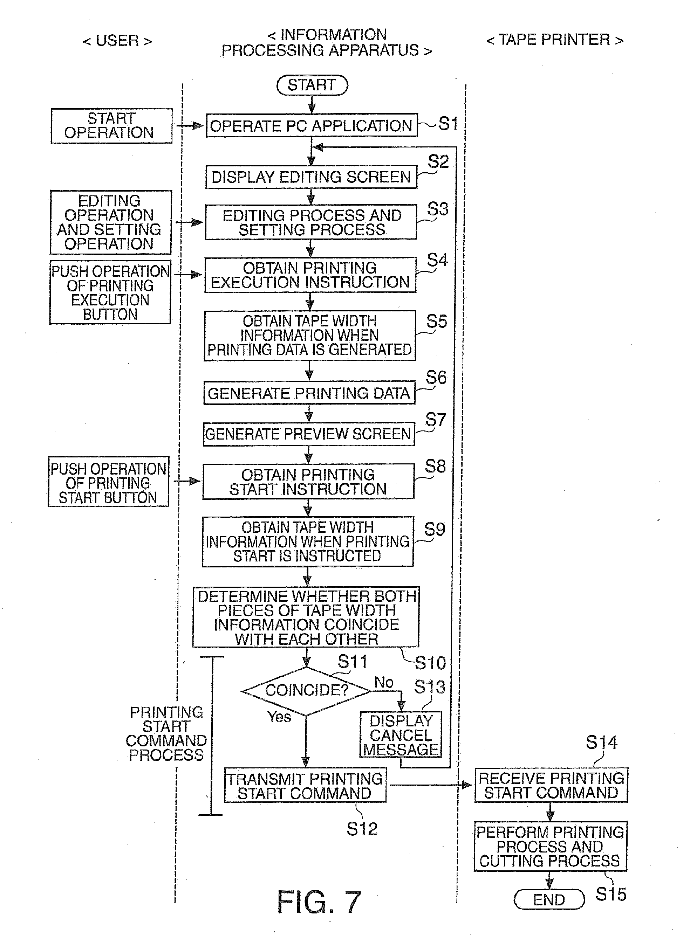

Next, the printing operation performed by the printing system 1 will be described with reference to a flowchart of Fig. 7. As shown in Fig. 7, firstly, if the start-up of the PC application 20b is instructed by an operation of the keyboard 11 or the mouse 12, the information processing section 2 starts up the PC application 20b (S1), and displays the editing screen 21 (see e.g. Fig. 3A) through the editing screen display section 201 (S2).

If the editing screen 21 is displayed, an editing process of the printing image G is performed and a setting process of the tape width and the tape length is performed (S3). These processes end according to a printing execution instruction of the user. Since a push operation of the printing execution button 34 displayed on the editing screen 21 becomes the printing execution instruction, the information processing apparatus 2 receives the printing execution instruction through the printing execution instructing section 202 in a state where the editing screen 21 is displayed.

Further, if the printing execution instruction (the push of the printing execution button 34) is obtained (S4), the set tape width is obtained as the tape width information when the printing data is generated by the information-at-generation obtaining section 203 (S5). Further, the printing data is generated by the printing data generating section 204, on the basis of editing in the editing screen 21, the set printing image G, the tape width and the tape length (printing data generation step, S6). If the printing data is generated, the preview screen 27 (see e.g. Fig. 3B) including the printing preview image P of the generated printing data is displayed by the preview screen display section 205 (S7). The display of the preview screen 27 ends by the printing start instruction of the user. Since the push of the printing start button 68 displayed on the preview screen 27 becomes the printing start instruction, the information processing apparatus 2 receives the printing start instruction by the printing start instructing section 206 in a state where the preview screen 27 is displayed.

Thereafter, the printing start instruction (the push of the printing start button 68) is obtained (printing start instruction step, S8), the tape width information when the printing start is instructed is obtained by the information-at-start obtaining section 207 (information-at-start obtaining step, S9). Specifically, the width information requesting signal is transmitted to the tape printer 3, the tape width information is received from the tape printer 3, and the tape width information is obtained, according to the printing start instruction, by the information-at-start obtaining section 207.

If the tape width information when the printing start is instructed is obtained, the tape width information obtained by the information-at-start obtaining section 207 when the printing start is instructed is compared with the tape width information obtained by the information-at-generation obtaining section 203 when the printing data is generated, by the width information determining section 208, to thereby determine whether both the pieces of tape width information coincide with each other (management information determination step, S10).

Thereafter, a start command process (printing start command steps, S11 to S13) is performed. In the start command process, in a case where it is determined that both the pieces of tape width information coincide with each other according to the determination result through the width information determining section 208 (S11, Yes), the printing start command which includes the generated printing data and the set tape width is transmitted to the tape printer 3 by the printing start command section 209 (S12). On the other hand, in a case where both the pieces of tape width information do not coincide with each other according to the determination result through the width information determining section 208 (S11, No), the printing start command through the printing start command section 209 is canceled, and a message indicating that the printing start command is canceled is displayed by the message display section 210 (S13). Then the procedure returns to the display process (S2) of the editing screen 21.

If the printing start command is transmitted, the tape printer 3 receives the command through the data receiving section 181 (S14). Further, the printing process and the cutting process are performed by the printing control section 182 and the cutting control section 183, according to the reception of the printing start command (S15). Specifically, the printing process is performed on the basis of the printing data given to the printing start command, by the printing control section 182. On the other hand, the cutting process is performed on the basis of the tape length given to the printing start command, by the cutting control section 183. In this way, this printing operation ends.

According to the configuration as described above, since the tape width information when the printing data is generated is compared with the tape width information when the printing start is instructed and in a case where both the pieces of tape width information do not coincide with each other, the printing start command to the tape printer 3 is canceled, it is possible to cancel the printing start command by confirming change in printing conditions during a time lag between the time when the printing data is generated and the time when the printing start is instructed, and to avoid deficiency of the printing process. Accordingly, it is possible to appropriately cope with the change in the printing condition after the printing data is generated, and to appropriately perform the printing process.

Further, since it is possible to confirm the printing process based on the printing data by displaying the preview screen 27 (printing confirmation screen), it is possible to prevent erroneous printing. Further, since the management information after the preview screen 27 is displayed (management information when the printing start is instructed) is obtained and is compared with the management information before the preview screen 27 is displayed (management information when the printing data is generated), it is possible to cancel the printing start command by confirming the change in the printing conditions before and after the preview screen 27 is displayed. Accordingly, it is possible to prevent the printing process confirmed in the printing confirmation screen and an actual printing process from being performed under different conditions.

Further, by notifying that the printing start command is canceled through the message display section 210, it is possible for a user to confirm that the printing start command is canceled.

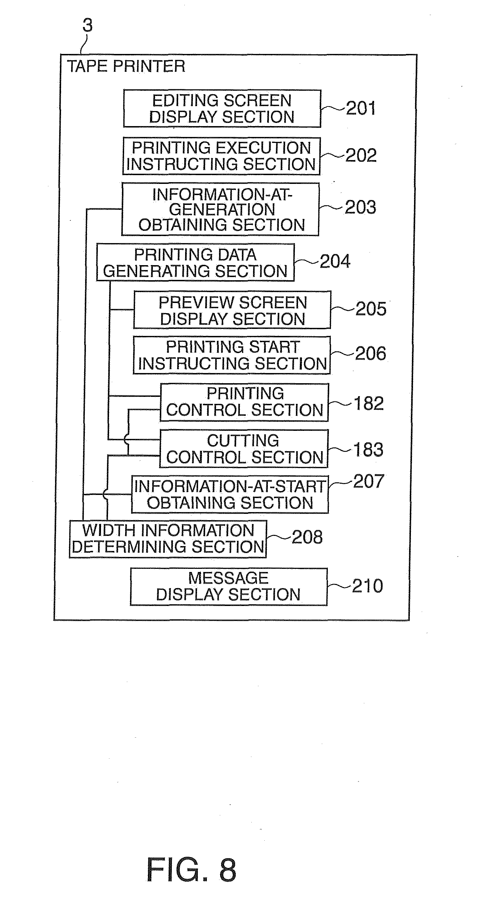

In the present embodiment, the invention is applied to the printing system 1 which includes the tape printer 3 and the information processing apparatus 2 which gives the printing instruction to the tape printer 3, but the invention may be applied to the tape printer (printer) 3 which is given the respective functions of the information processing apparatus 2. For example, as shown in Fig. 8, the tape printer 3 according to a modification example includes an editing screen display section 201, a printing execution instructing section 202, an information-at-generation obtaining section 203, a printing data generating section 204, a preview screen display section 205, a printing start instructing section 206, an information-at-start obtaining section 207, a width information determining section 208, a message display section 210, a printing control section 182, and a cutting control section 183. Further, the printing control section 182 and the cutting control section 183 perform a printing process based on the printing data and a cutting process based on the tape length, according to the printing start instruction through the printing start instructing section 206. Further, in a case where management information when the printing data is generated does not coincide with management information when the printing start is instructed according to the determination result through the width information determining section 208, the printing control section 182 and the cutting control section 183 cancel the printing process and the cutting process. In such a case, the data receiving section 181 and the printing start command section 209 may be omitted. Further, the information-at-start obtaining section 207 may directly obtain the tape width information, and thus, the tape width transmitting section 180 may be omitted.

Further, in the present embodiment, the tape width information when the printing data is generated and the tape width information when the printing start is instructed are obtained, and then, both the pieces of tape width information are compared with each other. However, as long as the obtained and compared object is the management information about the tape printer 3 (information used for managing the respective functions of the tape printer 3, for example, information about the tape printer 3, information about the respective sections thereof, information indicating their states, information about a printing medium, information indicating its state, or the like), the object is not limited to the tape width information. For example, the obtained and compared object may be tape type information about color of the printing tape T, its material such as PET, thermal paper or plain paper, its shape such as an elongated tape or a sticker type die cut tape, or the like, or remaining amount information. Further, the obtained and compared object may be information about the ink ribbon R accommodated in the tape cartridge C (type such as color, width or PET use or plain paper use, or remaining amount). Further, the obtained and compared object is not limited to the information about a consumable article accommodated in the tape cartridge C, but may be temperature, installation posture, type, battery remaining amount or operation state of the tape printer 3, switch state of the detecting section 135 (detecting whether the cover 103 is closed or opened, or detecting whether the tape cartridge C is present), or the like. Further, in a case where the invention is applied to a printer using an ink cartridge, color, type, remaining amount or the like of ink in the ink cartridge may be the obtained and compared object. Further, even in a case where a different cartridge (for example, a toner cartridge in a laser printer) is used, information about a consumable article (for example, toner) of the cartridge may be the obtained and compared object.

Further, in the present embodiment, the preview screen 27 which includes the buttons (printing start button 68 and cancel button 69) for selecting whether to instruct the printing start and the printing preview image P is displayed as the printing confirmation screen. However, as long as the screen is a screen for confirming whether to instruct the printing start of the printing data based on the editing result and the setting result (whether to perform the printing process), the screen is not limited to the preview screen 27. For example, a selection screen for simply selecting whether to instruct the printing start may be displayed as the printing confirmation screen. Further, a screen (for example, message dialogue) which includes some or all of the management information when the printing data is generated may be displayed as the printing confirmation screen.

Further, an error confirmation screen based on the management information when the printing data is generated may be displayed as the printing confirmation screen. Strictly speaking, an error confirmation screen (message dialogue) which includes an error information image indicating that the printing process based on the management information is not performed is displayed. For example, a battery remaining amount in the tape printer 3 is obtained as management information, and in a case where there is a possibility that the printing process is not performed, since the obtained battery remaining amount is equal to or lower than a threshold value, an error confirmation screen which includes a button for selecting whether to instruct the printing start and a message (error information image) such as "The battery remaining amount is reduced. Thus, there is a possibility that the printing process is not performed." is displayed. In this case, the management information when the printing data is generated is compared with the management information when the printing start is instructed, with respect to the printing start instruction. Then, by cancelling the printing start command (printing process) in a case where both the pieces of management information do not coincide with each other, the printing process is prevented from being performed in a state where the management information referenced when the error information image is displayed is different from the actual management information when the printing is performed.

Further, if the time lag occurs between the time when the printing data is generated and the time when the printing start is instructed, the display of the printing confirmation screen may be omitted. For example, the invention may be applied to a configuration in which, after the printing data is generated, the printing setting such as a printing sheet number is performed, and then, the printing start is instructed.

Further, in the present embodiment, the management information when the printing start is instructed is obtained and is compared with the management information which is stored in advance when the printing data is generated, and the printing start command (printing process) is canceled in a case where they are different from each other. However, management information when the tape printer 3 is stopped or is restarted from the stop, in addition to (or instead of) the management information when the printing start is instructed, may be obtained and compared with the management information when the printing data is generated, and the printing start command (printing process) may be canceled in a case where they are different from each other. Further, immediately before the printing process, the management information at that time may be obtained and compared with the management information when the printing data is generated, and the printing process may be canceled in a case where they are different from each other.

Further, in the present embodiment, the invention is applied to the tape printer 3 which is able to mount the tape cartridge C configured to accommodate the tape reel 122 on which the printing tape T is wound in the upper central part inside the cartridge case 121 and the ribbon reel 123 on which the ink ribbon R is wound in the right lower part therein, but the invention may be applied to the tape printer 3 which is able to directly mount the printing tape T and the ink ribbon R, respectively. In such a tape printer 3, for example, the tape width information or the ribbon width information is transmitted to the information processing apparatus 2 as the management information, and the information processing apparatus 2 determines whether the management information when the printing data is generated coincides with the management information when the printing start is instructed on the basis of the received management information. Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A printing system including a printer (3) and an information processing apparatus (2) which is configured to be connected to the printer (3) and to generate printing data, the printer (3) being configured to perform a printing process on the basis of the generated printing data,
wherein the information processing apparatus (2) comprises:
an information-at-generation obtaining section (203) for obtaining management information of the printer (3) when the printing data is generated;
a printing data generating section (204) for generating the printing data on the basis of the obtained management information;
a printing start instructing section (206) for instructing start of printing based on the printing data;
a printing start command section (209) for outputting a printing start command to the printer (3) on the basis of the printing start instruction;
an information-at-start obtaining section (207) for obtaining management information of the printer (3) when the printing start is instructed; and
a management information determining section (208) for determining whether the management information obtained when the printing data is generated and the management information obtained when the printing start is instructed coincide with each other, and
wherein in a case where the management information obtained when the printing data is generated and the management information obtained when the printing start is instructed do not coincide with each other, as a determination result in the management information determining section (208), the printing start command section (209) is configured to cancel the printing start command to the printer (3).

2. The printing system according to claim 1,
wherein the information processing apparatus (2) further comprises:
a confirmation screen display section (205) for displaying a printing confirmation screen (27) for confirming whether to perform a printing process based on the generated printing data, and
wherein the printing start instructing section (206) is configured to instruct the printing start in a state where the printing confirmation screen (27) is displayed.

3. The printing system according to claim 2,
wherein the confirmation screen display section (205) is configured to display a screen (27) which includes a printing preview image (P) based on the printing data, as the printing confirmation screen.

4. The printing system according to claim 2 or 3,
wherein the confirmation screen display section (205) is configured to display a screen which includes an error information image indicating that the printing process based on the management information obtained when the printing data is generated is not performed, as the printing confirmation screen, in a case where the management information obtained when the printing data is generated and the management information obtained when the printing start is instructed do not coincide with each other.

5. The printing system according to at least one of claims 1 to 4,
wherein the information processing apparatus (2) further comprises a notifying section (210) for notifying a cancellation of the printing start command when the printing start command is canceled.

6. The printing system according to at least one of claims 1 to 5,
wherein the printer (3) is configured to receive a cartridge (C) which accommodates a consumable article (T) relating to printing, and
wherein the management information is information about the consumable article (T) accommodated in the received cartridge (C).

7. The printing system according to claim 6,
wherein the consumable article is a printing tape (T), and
wherein the management information is information about the width and/or type of the printing tape (T) accommodated in the received cartridge (C).

8. A tape printer which functions as the printer used in the printing system according to at least one of claims 1 to 7.

9. A printer for performing a printing process on the basis of generated printing data, comprising:
an information-at-generation obtaining section (203) for obtaining management information of the printer (3) when the printing data is generated;
a printing data generating section (204) for generating the printing data on the basis of the obtained management information;
a printing start instructing section (206) for instructing start of printing based on the printing data;
a printing control section (182) for performing the printing process on the basis of the printing start instruction;
an information-at-start obtaining section (207) for obtaining management information of the printer (3) when the printing start is instructed; and
a management information determining section (208) for determining whether the management information obtained when the printing data is generated and the management information obtained when the printing start is instructed coincide with each other,
wherein in a case where the management information obtained when the printing data is generated and the management information obtained when the printing start is instructed do not coincide with each other, as a determination result in the management information determining section (208), the printing control section (182) is configured to cancel the printing process.

10. The printer according to claim 9, further comprising:
a confirmation screen display section (205) for displaying a printing confirmation screen (27) for confirming whether to perform a printing process based on the generated printing data, and
wherein the printing start instructing section (206) is configured to instruct the printing start in a state where the printing confirmation screen (27) is displayed.

11. The printer according to claim 10,
wherein the confirmation screen display section (205) is configured to display a screen (27) which includes a printing preview image (P) based on the printing data, as the printing confirmation screen.

12. The printer according to claim 10 or 11,
wherein the confirmation screen display section (205) is configured to display a screen which includes an error information image indicating that the printing process based on the management information obtained when the printing data is generated is not performed, as the printing confirmation screen, in a case where the management information obtained when the printing data is generated and the management information obtained when the printing start is instructed do not coincide with each other.

13. The printer according to at least one of claims 9 to 12, further comprising a notifying section (210) for notifying a cancellation of the printing process when the printing process is canceled.

14. The printer according to at least one of claims 9 to 13,
wherein the printer (3) is configured to receive a cartridge (C) which accommodates a consumable article (T) relating to printing, and
wherein the management information is information about the consumable article (T) accommodated in the received cartridge (C).

15. The printer according to claim 14,
wherein the consumable article is a printing tape (T), and
wherein the management information is information about the width and/or type of the printing tape (T) accommodated in the received cartridge (C).

16. A printing control method for controlling a printing system including a printer (3) and an information processing apparatus (2) which is configured to be connected to the printer (3) and to generate printing data, the printer (3) being configured to perform a printing process on the basis of the generated printing data,
the method comprising:
obtaining (S5) management information of the printer (3) when the printing data is generated;
generating (S6) the printing data on the basis of the obtained management information;
obtaining (S8) a start instruction of printing based on the printing data;
outputting (S12) a printing start command to the printer (3) on the basis of the printing start instruction;
obtaining (S9) management information of the printer (3) when the printing start instruction is obtained; and
determining (S11) whether the management information obtained when the printing data is generated and the management information obtained when the printing start instruction is obtained coincide with each other,
wherein in a case where the management information obtained when the printing data is generated and the management information obtained when the printing start instruction is obtained do not coincide with each other, as a determination result in the determining, the printing start command to the printer is canceled, in the outputting (S12).

17. A computer program product comprising program means for causing a routine of the printing control method of the printing system according to claim 16 to be executed in a computer.
